# FASCICULE DE BREVET EUROPEEN

(11) **EP 1 381 798 B1**
(45) Date de publication et mention de la délivrance du brevet: **11.04.2007**
(21) Numéro de dépôt: 02726268.2
(22) Date de dépôt: 22.04.2002
(51) Int. Cl.: F16J 15/08

(54) **JOINT D'ETANCHEITE METALLIQUE ELASTIQUE**
ELASTISCHE METALLDICHTUNG
ELASTIC METAL GASKET

(30) Priorité: 23.04.2001 FR 0105427
(43) Date de publication de la demande: 21.01.2004
(73) Titulaire: COMMISSARIAT A L'ENERGIE ATOMIQUE, 75015 Paris (FR); Garlock France SAS, 42029 Saint Etienne Cédex (FR)
(72) Inventeur: ROUAUD, Christian, F-07700 Bourg Saint-Andeol (FR); CAPLAIN, Philippe, F-26130 Saint-Paul Trois Chateaux (FR)
(74) Mandataire: Poulin, Gérard
(86) Numéro de dépôt international: PCT/FR2002/001372
(87) Numéro de publication internationale: WO 2002/086357

(56) Documents cités:
- FR-A- 2 557 662
- FR-A- 2 636 115

## Description

### Domaine de l'invention

L'invention concerne le domaine de l'étanchéité statique, et en particulier les joints métalliques élastiques devant assurer une étanchéité avec des forces de serrage inférieures à celles nécessaires à l'efficacité de ceux dont l'âme est un ressort, cf. FR-A-2 557 662.

### Art antérieur et problème posé

Compte tenu du choix de leurs matériaux vis-à-vis de leur insensibilité aux fluides corrosifs, de leur bon comportement à haute et basse températures et de leur bonne tenue dans le temps, les joints d'étanchéité métalliques sont utilisés dans des domaines d'application très divers, parmi lesquels on peut citer, de façon nullement limitative, les industries chimique, pétrolière et nucléaire, ainsi que les secteurs automobile et spatial. La qualité de l'étanchéité, procurée par un joint d'étanchéité, dépend notamment de la pression spécifique développée entre les surfaces de contact du joint et les brides de l'assemblage dans lequel le joint est placé. Au cours du serrage initial de l'assemblage, la pression spécifique de contact doit être suffisante pour permettre l'adaptation du joint aux aspérités des surfaces des brides. Il est donc clair que la pression spécifique de contact doit être relativement élevée, en tout cas supérieure à la pression du fluide régnant à l'intérieur du volume délimité par le joint et les surfaces de bride de serrage.

D'autre part, dans de nombreuses applications, l'effort de serrage doit rester faible. Ceci est notamment le cas lorsque l'assemblage est peu accessible et rend difficile la manipulation des outils de serrage, comme dans l'industrie nucléaire et l'industrie du semi-conducteur et lorsque les assemblages en matériaux à hautes caractéristiques doivent être allégés et ne supportent pas les efforts élevés, comme dans les industries aéronautique et spatiale.

On connaît deux structures de joints métalliques de ce type, qui se caractérisent par l'utilisation d'une âme centrale métallique, ouverte ou fermée sur laquelle on vient faire un dépôt électrolytique d'un matériau ductile. Dans ce type de joint, l'obtention de l'étanchéité est obtenue par déformation plastique du matériau constituant la couche externe ductile. En conséquence, il faut développer une pression de contact, au moyen de l'âme métallique supérieure à la limite élastique du revêtement à déformer.

Or, il existe un domaine de l'industrie où s'arrête la possibilité de l'utilisation de ce type de joint métallique. Il s'agit du domaine du vide et du vide poussé, où les structures légères imposent pratiquement l'emploi de l'aluminium, comme revêtement de l'étanchéité. Or, on ne sait pas déposer un revêtement d'aluminium sur un substrat métallique, sans créer de porosité, ou compatible avec les états de surface et la dureté superficielle exigés par les niveaux d'étanchéité très élevés.

Le but de l'invention est donc de remédier à cet inconvénient, en proposant un joint de type différent à ceux exposés dans les paragraphes ci-dessus, en utilisant un matériau ductile comme l'aluminium, le cuivre, l'argent ou l'or, ou autre matériau qui ne puisse être déposé selon les procédés habituels.

### Résumé de l'invention

A cet effet, l'objet principal de l'invention est un joint métallique élastique, ouvert ou fermé, comprenant une âme métallique élastique et une enveloppe externe en matériau ductile, dans laquelle est encastrée l'âme métallique. Le joint présente, lorsqu'il est repos, une section de forme circulaires l'enveloppe externe est réalisée en deux feuilles.

Selon l'invention, l'enveloppe externe et l'âme métallique n'ont pas de liaison mécanique particulière entre elles, de manière à pouvoir se déplacer et se déformer indépendamment l'une de l'autre, l'âme métallique étant réalisée en deux feuilles métalliques.

Dans une variante du joint selon l'invention, l'âme métallique et l'enveloppe externe sont toutes deux ouvertes au même endroit.

Conjointement, une autre variante consiste à prévoir l'âme métallique et l'enveloppe externe toutes deux fermées.

Enfin, dans une dernière réalisation, on peut envisager d'employer une âme métallique fermée sur laquelle est placée une enveloppe externe ouverte.

De préférence, le matériau constituant la couche externe est de l'aluminium.

Dans un grand nombre de réalisations du joint selon l'invention, celui-ci est de forme générale annulaire. Dans ce cas, l'ouverture peut être positionnée vers l'axe de symétrie du joint ou à l'opposé de celui-ci.

Le joint peut également être de différentes formes, par exemple de forme elliptique, de forme triangulaire ou de forme rectangulaire.

### Liste des figures

L'invention et ses différentes caractéristiques seront mieux comprises à la lecture de la description suivante, qui est illustrée de trois figures représentant respectivement :
- figure 1, en coupe, la section d'un joint selon une deuxième réalisation de l'invention ; et
- figures 2 à 5, différentes formes que peut avoir le joint.

### Description détaillée de trois réalisations de l'invention

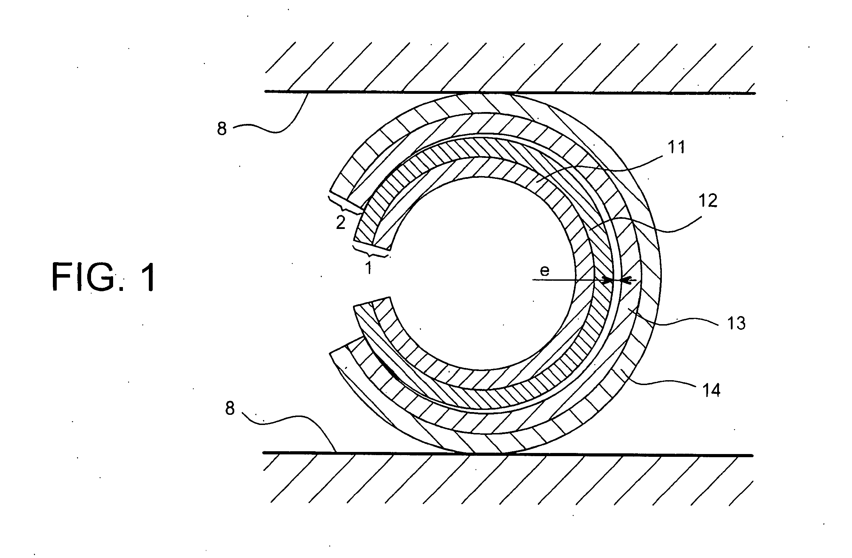

La figure 1 représente un joint selon l'invention dont la section est circulaire, mais ouverte ; cette ouverture peut être située d'un côté comme de l'autre vers le centre du joint ou à l'opposé, lorsque le joint est annulaire. Le joint a été représenté en contact entre deux brides à étancher 8.

Le joint comprend donc principalement une âme métallique 1, qui est centrale, et qui se trouve encastrée dans une enveloppe externe 2. L'âme métallique 1 doit donc être déformable, mais très résistante pour opposer un effort de réaction suffisant pour obtenir l'étanchéité par écrasement partiel de l'enveloppe externe 2. Les matériaux utilisés pour constituer l'âme métallique 1 peuvent être par exemple l'inox écroui, le cupro-bérylium, les alliages de nickel ou de titane.

Pour réaliser l'enveloppe externe 2 qui doit être ductile, on peut choisir des matériaux, tel que l'étain, l'argent, l'or, le cuivre ou des matériaux rendus ductiles, comme l'acier inoxydable recuit ou le nickel recuit, mais en particulier l'aluminium.

Les deux parties principales d'un joint sont réalisées chacune, en deux feuillards, d'égales épaisseurs. En d'autres termes, l'âme métallique de ce type de joint est réalisée par deux feuillards 11 et 12, d'égales épaisseurs, enroulés l'un dans l'autre. De la même manière, l'enveloppe externe est réalisée de deux enveloppes ductiles 13 et 14 mises en forme autour de l'âme métallique 12.

Une telle structure « multifeuille » apporte une meilleure tenue à la fatigue, par exemple lors de sollicitations mécaniques cycliques ou alternées.

Selon l'invention, il est primordial que l'âme métallique 1 soit encastrée purement et simplement dans l'enveloppe externe 2 et qu'il n'y ait aucune liaison mécanique entre ces deux parties. En effet, une disjonction entre ces deux parties principales permet de bénéficier simultanément des propriétés mécaniques des matériaux qui ont des propriétés complémentaires et de palier à des défauts d'interaction entre ces deux parties.

A cet effet, sur cette figure 1, on a représenté un interstice e existant entre l'enveloppe externe 2 et l'âme métallique 1 pour matérialiser les éventuels mouvements ou dilatations de ces deux éléments l'un par rapport à l'autre.

De plus, l'utilisation d'une âme métallique en forme de tube ouvert ou fermé autorise la modulation de la raideur du joint, de façon pratiquement illimitée. Ceci n'est pas le cas si on utilise un ressort métallique à spires jointives qui peut se coucher ou s'incruster dans l'enveloppe externe. Une réalisation concrète à été obtenue avec un joint de diamètre extérieur d'environ 5 mm. Il est constitué d'une enveloppe externe d'aluminium d'épaisseur d'environ 0,5 mm et d'une âme métallique en alliage de nickel d'épaisseur de 0,61 mm et de 4 mm de diamètre. Cette association géométrique conduit à un écrasement de 0,8 mm pour un effort linéique de l'ordre de 150 N. mm⁻¹ et à un niveau d'étanchéité de 10⁻¹⁰ mbar.l.s⁻¹ à l'hélium.

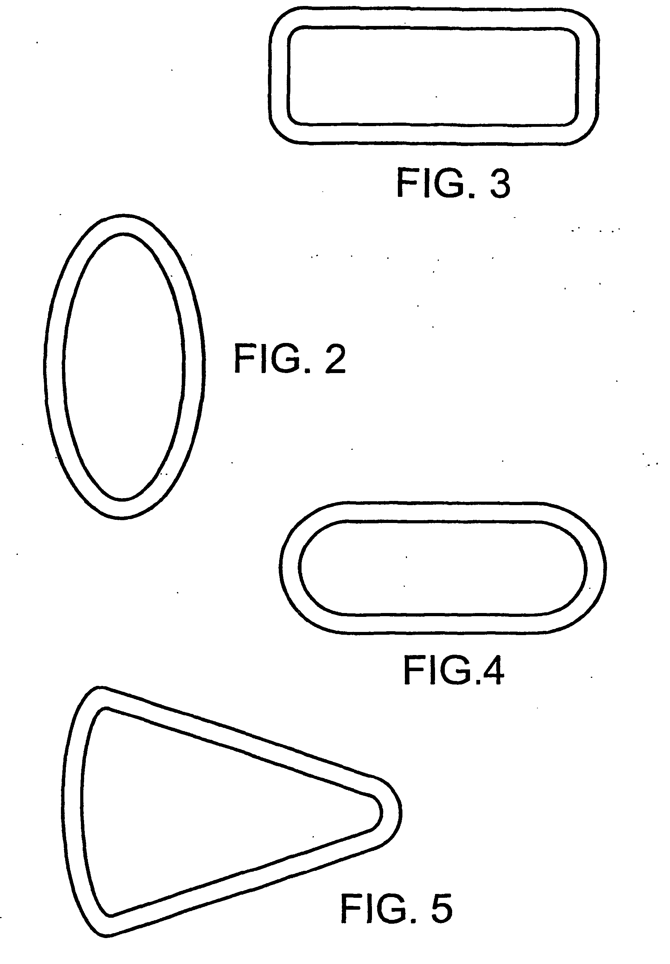

Il faut remarquer que, dans un grand nombre de réalisations du joint selon l'invention, celui-ci est de forme générale annulaire. Mais, dans d'autres réalisations du joint selon l'invention, celui-ci peut être elliptique (figure 4), rectangulaire, généralement rectangulaire avec des coins arrondis (figure 5), triangulaire, oblongue (figure 6) ou d'une des autres formes résultant d'une combinaison et/ou d'une modification de ces formes (figure 7).

### Avantages de l'invention

L'enveloppe externe qui assure la fonction étanchéité et qui de ce fait doit être en matériau ductile vient enrober l'élément élastique, mais sans aucune adhésion sur lui contrairement, par, exemple, à un dépôt électrolytique (état de l'art).

Cette conception de procédé de fabrication autorise l'emploi de tout type de matériau en feuille mince et en particulier celui de l'aluminium.

Cette conception de joint à composants de sections circulaires ouvertes concentriques permet de bénéficier au maximum de la ductilité du matériau externe, sachant qu'un matériau déposé présente une dureté toujours supérieure au même matériau laminé à l'état recuit.

Le choix des éléments, tous en forme de C, conduit à une grande souplesse et à un retour élastique important.

## Revendications

1. Joint d'étanchéité métallique élastique comprenant une âme métallique élastique (1, 11 et 12) et une enveloppe externe (2, 13 et 14) en matériau ductile, dans laquelle est encastrée l'âme métallique, le joint présentant, lorsqu'il est au repos une section de forme circulaire, l'enveloppe externe étant réalisée en deux feuilles
**caractérisé en ce que** l'enveloppe externe (2, 6, 13 et 14) et l'âme métallique (1, 5, 11 et 12) n'ont pas de liaison mécanique particulière entre elles, de manière à pouvoir se déplacer et se déformer indépendamment l'une de l'autre, et **en ce que** l'âme métallique est réalisée en deux feuilles (11, 12).

2. Joint selon la revendication 1, **caractérisé en ce que** l'âme métallique (1, 11 et 12) et l'enveloppe externe (2, 13 et 14) sont ouvertes.

3. Joint selon la revendication 1, **caractérisé en ce que** l'âme métallique (5) est fermée et ce **en ce que** l'enveloppe externe (6) est ouverte.

4. Joint selon la revendication 1, **caractérisé en ce que** le matériau constituant l'enveloppe externe est l'aluminium.

5. Joint selon la revendication 1, **caractérisé en ce qu'**il est de forme générale annulaire.

6. Joint selon la revendication 5, **caractérisé en ce qu'**il est de forme elliptique.

7. Joint selon la revendication 5, **caractérisé en ce qu'**il est de forme triangulaire.

8. Joint selon la revendication 5, **caractérisé en ce qu'**il est de forme rectangulaire.

9. Joint selon la revendication 5, **caractérisé en ce que** l'ouverture (12) est positionnée vers l'axe de symétrie du joint ou à l'opposé de celui-ci.

## Claims

1. Elastic metal gasket comprising an elastic metal core (1, 11, 12) and an outer envelope (2, 13, 14) made of ductile material, in which the metal core is clamped, the gasket having, when free of stress, a section of circular shape, the outer envelope being formed from two leaves,
**characterized in that** the outer envelope (2, 6, 13, 14) and the metal core (1, 5, 11, 12) do not have any particular mechanical connections between them, so that they can move and deform independently of each other and **in that** the metal core is made from two leaves (11, 12).

2. Gasket according to claim 1, **characterized in that** the metal core (1, 11, 12) and the outer envelope (2, 13, 14) are open.

3. Gasket according to claim 1, **characterized in that** the metal core (5) is closed and **in that** the outer envelope (6) is open.

4. Gasket according to claim 1, **characterized in that** the material constituting the outer envelope is aluminium.

5. Gasket according to claim 1, **characterized in that** its general shape is that of a ring.

6. Gasket according to claim 5, **characterized in that** it is elliptical in shape.

7. Gasket according to claim 5, **characterized in that** it is triangular in shape.

8. Gasket according to claim 5, **characterized in that** it is rectangular in shape.

9. Gasket according to claim 5, **characterized in that** the opening (12) is positioned towards the axis of symmetry of the gasket or facing it.

## Patentansprüche

1. Elastische metallische Dichtung mit einem elastischen Metallkern (1, 11 und 12) und einer Außenhülle (2, 13 und 14) aus dehnbarem Material, in die der Metallkern eingefügt ist, wobei die Dichtung, wenn sie im Ruhezustand ist, einen Querschnitt von kreisrunder Form aufweist und die Außenhülle durch zwei Lagen gebildet wird,
**dadurch gekennzeichnet, dass** es zwischen der Außenhülle (2, 6, 13 und 14) und dem Metallkern (1, 5, 11 und 12) keine spezielle mechanische Verbindung gibt, so dass sie sich unabhängig voneinander verschieben und verformen können, und **dadurch**, dass der Metallkern durch zwei Lagen (11, 12) gebildet wird.

2. Dichtung nach Anspruch 1, **dadurch gekennzeichnet, dass** der Metallkern (1, 11 und 12) und die Außenhülle (2, 13 und 14) offen sind.

3. Dichtung nach Anspruch 1, **dadurch gekennzeichnet, dass** der Metallkern (5) geschlossen ist, und **dadurch**, dass die Außenhülle (6) offen ist.

4. Dichtung nach Anspruch 1, **dadurch gekennzeichnet, dass** das die Außenhülle bildende Material Aluminium ist.

5. Dichtung nach Anspruch 1, **dadurch gekennzeichnet, dass** sie generell ringförmig ist.

6. Dichtung nach Anspruch 5, **dadurch gekennzeichnet, dass** sie generell elliptisch ist.

7. Dichtung nach Anspruch 5, **dadurch gekennzeichnet, dass** sie generell dreieckig ist.

8. Dichtung nach Anspruch 5, **dadurch gekennzeichnet, dass** sie generell rechteckig ist.

9. Dichtung nach Anspruch 5, **dadurch gekennzeichnet, dass** die Öffnung (12) in Richtung Symmetrieachse der Dichtung oder entegegengesetzt zu dieser positioniert ist bzw. wird.
